# EUROPEAN PATENT APPLICATION

(11) **EP 2 743 821 A1**
(43) Date of publication of application: **18.06.2014**
(21) Application number: 12306563.3
(22) Date of filing: 11.12.2012
(51) Int. Cl.: G06F 3/06, G06F 11/14

(54) **User data duplication**

(71) Applicant: Alcatel Lucent, 75007 Paris (FR)
(72) Inventor: Cherubini, Davide, Dublin, 15 (IE); Franck, Franck, Dublin, 15 (IE); Jul, Eric, Dublin, 15 (IE); Connolly, Kevin, Dublin, 15 (IE)
(74) Representative: Leppard, Andrew John

(57) **Abstract**

A user data duplication method, a data processing apparatus and a computer program product are disclosed. The user data duplication method comprises: receiving characteristic information relating to characteristics of each of a plurality of heterogeneous storage domain tiers, each storage domain tier having differing characteristics to other storage domain tiers; receiving an indication of user data to be duplicated on each storage domain tier in accordance with duplication requirements; and coordinating duplication of the user data on each storage domain tier to meet the duplication requirements based on the characteristic information. In this way, a hybrid approach is provided which utilises different storage domains arranged in tiers or logical layers, each of which may be utilised to store a duplicate copy of the user data. The different characteristics of these domains is far from disadvantageous and instead these different characteristics may conveniently be exploited to enable the storage tiers to satisfy a wide range of different duplication or back up requirements. Such an arrangement means that rather than needing a tier to have the capacity to meet a wide range of stringent requirements, lesser requirements may be met by each individual tier, with the combination of these tiers collectively achieving those stringent requirements. Also, by utilising different tiers, independent storage of each copy can occur, each with their own differing potential failure modes, which can lead to greater overall reliability.

## Description

### FIELD OF THE INVENTION

The present invention relates to a user data duplication method, a data processing apparatus and a computer program product.

### BACKGROUND

The removal, theft or loss of information stored in data processing apparatus, such as computers, can be problematic for individuals and enterprises. In order to help ameliorate this problem, back-up copies of the information are made and these copies are stored in a secure place. Such data back-up is vital to protect this information. In order to achieve this, a duplication or back-up regime is required where the information which needs to be safeguarded is duplicated. Should loss of information occur, then the lost information can be restored from the back-up copies. Although existing data duplication or back-up regimes help to safeguard user data, unexpected consequences can occur.

Accordingly, it is desired to provide an improved user data duplication technique.

### SUMMARY

According to a first aspect, there is provided a user data duplication method, comprising: receiving characteristic information relating to characteristics of each of a plurality of heterogeneous storage domain tiers, each storage domain tier having differing characteristics to other storage domain tiers; receiving an indication of user data to be duplicated on each storage domain tier in accordance with duplication requirements; and coordinating duplication of the user data on each storage domain tier to meet the duplication requirements based on the characteristic information.

The first aspect recognises that a problem with existing data duplication or back-up techniques is that these techniques do not offer an ideal trade-off between speed, scalability, availability, confidentiality and cost. In particular, existing techniques tend to be optimized for only a sub-set of these factors and so generally fail to achieve all of these.

Accordingly, a user data duplication or back-up method is provided. The method may comprise the step of receiving characteristic information relating to each of a plurality of different heterogeneous storage domain tiers. Each tier may have differing or dissimilar characteristics. The method may also comprise the step of receiving an indication of user data to be duplicated or backed up onto each tier in accordance with duplication requirements associated with that user data. The method may also comprise the step of coordinating the duplication of the user data within the tiers in order to achieve the duplication requirements given the characteristic information of each tier. In this way, a hybrid approach is provided which utilises different storage domains arranged in tiers or logical layers, each of which may be utilised to store a duplicate copy of the user data. The different characteristics of these domains is far from disadvantageous and instead these different characteristics may conveniently be exploited to enable the storage tiers to satisfy a wide range of different duplication or back up requirements. Such an arrangement means that rather than needing a tier to have the capacity to meet a wide range of stringent requirements, lesser requirements may be met by each individual tier, with the combination of these tiers collectively achieving those stringent requirements. Also, by utilising different tiers, independent storage of each copy can occur, each with their own differing potential failure modes, which can lead to greater overall reliability.

In one embodiment, each storage domain tier comprises differing storage technologies. Accordingly, each tier or layer may comprise dissimilar storage technologies. Providing tiers with different technologies ensures that the characteristics of these tiers differ and reduces the likelihood of a common-mode failure.

In one embodiment, storage domain tiers comprise identical storage technologies. For example, more than one tier may be provided by local network storage or by cloud providers.

In one embodiment, different cloud providers provide tiers which are included or excluded depending on, for example, the provider having the lowest cost at any particular time.

In one embodiment, at least one storage domain tier comprises a combination of different storage devices. Accordingly, each tier may be a logical set of discreet storage devices which collectively coordinate to provide a domain layer. For example, at least one storage domain tier may comprise a peer-to-peer network.

In one embodiment, at least one storage domain tier comprises a single storage device which may comprise, for example, a disk drive or a server with multiple disk drives.

In one embodiment, at least one storage domain tier comprises at least one of local storage, local distributed storage, local centralised storage, remote storage, remote distributed storage and remote centralised storage. Accordingly, it will be appreciated that a variety of different types of storage may be arranged as a domain tier or layer.

In one embodiment, the characteristic information comprises at least one of an access speed, an availability, a reliability, a confidentiality and a cost of each storage domain tier. It will be appreciated that other characteristic information relating to the tier or layer may be provided.

In one embodiment, the duplication requirements comprise at least one of an access speed, an availability, a reliability and a confidentiality of the user data. It will be appreciated that other duplication requirements may be provided.

In one embodiment, the step of coordinating duplication comprises determining a number of copies of the user data to be stored by at least one storage domain tier in order to meet the duplication requirements given the characteristic information of that storage domain tier. Accordingly, the number of copies of the user data stored by any particular tier or layer may be determined in response to the duplication requirements for the user data. For example, should a minimum number of copies of data be specified by those requirements then the number of copies may be determined from this. Likewise, if an availability is specified for the user data, then the number of copies required may be determined based on the reliability of the storage devices within a particular tier. For example, a tier with a low reliability may store a greater number of copies for a given availability requirement than a tier with a higher reliability.

In one embodiment, the step of coordinating duplication comprises instructing a node within each tier to coordinate the creation of the number of copies of the user data within that storage domain tier. By instructing a node within each tier to coordinate the duplication of user data within a tier, the amount of traffic between the tiers is reduced. For example, for a network attached storage tier, a node may have a number of disks attached. It will be appreciated that in a cloud storage tier such a node may be absent.

In one embodiment, the node provides an acknowledgement when each copy is created. Providing an acknowledgement helps to improve integrity.

In one embodiment, each copy is distributed over multiple storage devices in a distributed storage domain tier. Distributing each copy of the user data across multiple storage devices reduces the burden on any one particular storage device.

In one embodiment, at least one distributed storage domain tier comprises a peer-to-peer network.

In one embodiment, at least one storage domain tier comprises storage devices of users whose user data is to be duplicated. This enables spare capacity on storage devices of users to be utilised and obviates the need to provide dedicated storage.

In one embodiment, the method comprises the step ofre-coordinating duplication of the user data based on changes to at least one of the characteristic information and the duplication requirements. Accordingly, should a change occur then the duplication is adapted dynamically to take account of those changes.

In one embodiment, the step of re-coordinating duplication of the user data based comprises varying an amount of the user data stored on storage devices within at least one storage domain tier based on a change in the characteristic information indicating a change in a limit on the amount of user data storable on each storage device within the storage domain tier. Accordingly, the amount of spare capacity within a user device which may be used for storing duplicate or back-up user data may be varied dynamically.

In one embodiment, the step of re-coordinating duplication of the user data comprises reduplicating user data determined to be missing within a storage domain tier. Accordingly, should data be absent from a tier or layer, then that missing data may be added to the tier. It will be appreciated that such duplication may occur either from other copies within the tier, from user data stored in another tier or from the original user data.

In one embodiment, the step of re-coordinating duplication of the user data comprises reduplicating user data determined to be missing within an added storage domain tier. Accordingly, should an additional tier be included then the user data may be added to that additional tier in a similar manner to that described above.

In one embodiment, the step of reduplicating comprises reduplicating missing user data from another copy within that storage domain tier.

In one embodiment, the step of reduplicating comprises reduplicating missing user data from another storage domain tier.

In one embodiment, the step of coordinating duplication of the user data comprises duplicating the user data onto an initial one of the plurality of storage domain tiers indicated by its characteristic information to be the quickest of the plurality of storage domain tiers to store the user data. By duplicating user data first onto the tier which is fastest at storing the duplicated user data, enhanced confidence can be provided that the duplication or back-up is as up to date as possible.

In one embodiment, the step of coordinating duplication of the user data comprises duplicating the user data stored by the initial one of the plurality of storage domain tiers to other of the plurality of storage domain tiers. Accordingly, once the user data is stored on an initial tier or layer, then that user data can be duplicated to other tiers or layers when appropriate.

In one embodiment, the step of duplicating of the user data between the plurality of storage domain tiers comprises transferring user data between the plurality of storage domain tiers to minimise impact on other traffic.

In one embodiment, the step of transferring data between the plurality of storage domain tiers minimises impact on other traffic by transferring user data when a capacity of a link between tiers is not being fully utilised above a preconfigured threshold.

In one embodiment, the user data is removed from a storage domain tier when that storage domain tier ceases to be included within the plurality of storage domain tiers. Accordingly, any user data may be deleted when a tier is removed.

In one embodiment, the method comprises the step of duplicating, on each storage domain tier, coordination information relating to coordinating duplication of the user data on each storage domain tier.

In one embodiment, the method comprises the step of providing, in response to a request from a user, an indication of user data stored on each storage domain tier.

In one embodiment, the method comprises the step of duplicating user data from at least one of the storage domain tiers onto a user device.

According to a second aspect, there is provided a computer program product operable, when executed on a computer, to perform the method steps of the first aspect.

According to a third aspect, there is provided an apparatus operable to perform user data duplication, comprising: reception logic operable to receive characteristic information relating to characteristics of each of a plurality of heterogeneous storage domain tiers, each storage domain tier having differing characteristics to other storage domain tiers and to receive an indication of user data to be duplicated on each storage domain tier in accordance with duplication requirements; and coordination logic operable to coordinate duplication of the user data on each storage domain tier to meet the duplication requirements based on the characteristic information.

In one embodiment, each storage domain tier comprises differing storage technologies.

In one embodiment, at least one storage domain tier comprises a combination of different storage devices.

In one embodiment, at least one storage domain tier comprises at least one of local storage, local distributed storage, local centralised storage, remote storage, remote distributed storage and remote centralised storage.

In one embodiment, the characteristic information comprises at least one of an access speed, an availability, a reliability and a confidentiality of each storage domain tier.

In one embodiment, the duplication requirements comprise at least one of an access speed, an availability, a reliability and a confidentiality of the user data.

In one embodiment, the coordination logic is operable to determine a number of copies of the user data to be stored by at least one storage domain tier in order to meet the duplication requirements given the characteristic information of that storage domain tier.

In one embodiment, the coordination logic is operable to instruct a node within each tier to coordinate the creation of the number of copies of the user data within that storage domain tier.

In one embodiment, the node provides an acknowledgement when each copy is created.

In one embodiment, each copy is distributed over multiple storage devices in a distributed storage domain tier.

In one embodiment, at least one distributed storage domain tier comprises a peer-to-peer network.

In one embodiment, at least one storage domain tier comprises storage devices of users whose user data is to be duplicated.

In one embodiment, the coordination logic is operable to re-coordinate duplication of the user data based on changes to at least one of the characteristic information and the duplication requirements.

In one embodiment, the coordination logic is operable to re-coordinate duplication of the user data by varying an amount of the user data stored on storage devices within at least one storage domain tier based on a change in the characteristic information indicating a change in a limit on the amount of user data storable on each storage device within the storage domain tier.

In one embodiment, the coordination logic is operable to re-coordinate duplication of the user data by reduplicating user data determined to be missing within a storage domain tier.

In one embodiment, the coordination logic is operable to re-coordinate duplication of the user data by reduplicating user data determined to be missing within an added storage domain tier.

In one embodiment, the coordination logic is operable to reduplicate missing user data from another copy within that storage domain tier.

In one embodiment, the coordination logic is operable to reduplicate missing user data from another storage domain tier.

In one embodiment, the coordination logic is operable to duplicate the user data onto an initial one of the plurality of storage domain tiers indicated by its characteristic information to be the quickest of the plurality of storage domain tiers to store the user data.

In one embodiment, the coordination logic is operable to duplicate the user data stored by the initial one of the plurality of storage domain tiers to other of the plurality of storage domain tiers.

In one embodiment, the coordination logic is operable to duplicate the user data between the plurality of storage domain tiers by transferring user data between the plurality of storage domain tiers to minimise impact on other traffic.

In one embodiment, the coordination logic is operable to transfer data between the plurality of storage domain tiers to minimise impact on other traffic by transferring user data when a capacity of a link between tiers is not being fully utilised above a preconfigured threshold.

In one embodiment, the coordination logic is operable to remove user data from a storage domain tier when that storage domain tier ceases to be included within the plurality of storage domain tiers.

In one embodiment, the coordination logic is operable to duplicate, on each storage domain tier, coordination information relating to coordinating duplication of the user data on each storage domain tier.

In one embodiment, the apparatus comprises logic operable to provide, in response to a request from a user, an indication of user data stored on each storage domain tier.

In one embodiment, the coordination logic is operable to duplicate user data from at least one of the storage domain tiers onto a user device.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates an example enterprise arrangement according to one embodiment;
Figure 2 illustrates processing steps of a client;
Figure 3 illustrates a distributed tier;
Figure 4 illustrates smart tier synchronisation; and
Figure 5 illustrates dumb tier synchronisation.

### DESCRIPTION OF THE EMBODIMENTS

### Overview

Before discussing embodiments in any more detail first an overview will be provided. Embodiments provide a technique in which a homogenous and co-ordinated interface to a multi-tiered heterogeneous environment where technology such as, and not limited to, locally distributed client storage (for example, a peer-to-peer network), locally centralised storage (which may be on site), remotely centralised back-up storage (which may be off site) or cloud storage can be interleaved to provide improved storage and retrieval performance than any one of those technologies can provide on its own.

In particular, a service is provided which may be implemented in hardware or software which allows available storage resources to be divided into storage domain tiers, where each tier is defined by characteristics such as, and not limited to, its storage medium, its access speed, its availability, and the cost of access.

Given a set of requirements for duplicating user data (such as the maximum or minimum number of tiers to employ, a maximum or minimum number of duplicated copies to be provided, a minimum availability level for any tier and/ or a maximum cost) the service will, without user intervention, co-ordinate the duplication or back-up process by co-ordinating the duplication of the user data across the storage domain tiers.

In particular, the service arranges storage resources into storage domain tiers and collects information on the characteristics and/ or status of each tier (for example, its available storage, level of congestion, network access latency and the like) in order to provide the user with the best storage destination for the data. Typically, the data to be duplicated will be fragmented in order to control the amount of data transferred at any one time. Client software running on the service and, where appropriate, on each tier ensures that at least one copy of the data is stored on each utilised tier, from where it may later be retrieved and restored at the user's request. The presence of multiple tiers, each with their particular characteristics, guarantees high availability and high reliability.

This approach provides flexibility and reliability in the duplication of user data since tiers may be utilised according to their characteristics in order to satisfy the duplication requirements. In addition, tiers can be added to or removed dynamically and appropriate duplication can occur for the current tiers automatically. Also, the duplication can be altered in response to changes in the user requirements for duplication. This provides for multiple sources from which the user data may be retrieved should that user data be lost or inaccessible.

Embodiments enable an administrator to divide available storage resources into tiers, where each tier is defined by its storage medium, its access speed, its availability, and the cost associated with accessing it. Embodiments will, without user intervention, ensure that one copy of a desired piece of data is kept in store on each tier, from where it may later be retrieved and restored at the user's request. Ensuring the availability of a piece of data on each tier may involve storing it on a highly reliable device, or having replicated copies at each tier, e.g., if the tier consists of storage units with low reliability such as in a Peer-2-Peer system.

A tier may consist of (and not limited to):
1) local storage on any client device that is part of the system,
2) dedicated local storage hardware, such as a file server or NAS,
3) remote dedicated storage hardware, such as a file server or NAS,
4) cloud storage, e.g., as provided by Amazon S3.

Embodiments provide multiple tiers each with their particular characteristics concerning the five factors mentioned in table 1. By using multiple tiers, high availability and high reliability can be achieved, despite that any given tier may not fulfil our requirements. The data to be backed up is assumed to reside on client laptops or PCs located on, the enterprises local area network, LAN. Backup copies are then spread to each tier in an efficient and cost-effective manner. The tier administration and the administration of where each backed up part of a file is present performed by a module or service. The service may be replicated on several or all tiers as to maintain reliability.

### Example Arrangement

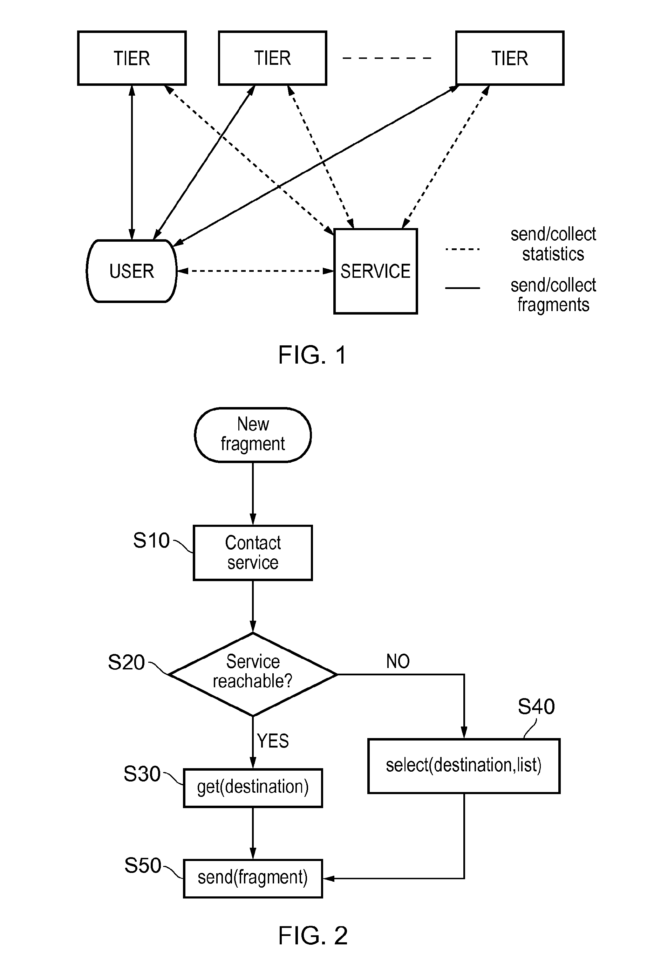

Figure 1 shows an example enterprise arrangement. In this example, a number of heterogeneous tiers are provided where each tier utilises differing storage types. User data is typically copied to each of these tiers. Tier 1 consists of a number of laptop and desktop computers having local storage devices. Each computer is linked by a local network to which those computers are attached when they are present. Tier 2 comprises local storage devices at the enterprise such as, for example, file servers or network attached servers. Tier 3 comprises internet or cloud-based storage. It will be appreciated that greater or fewer than 3 tiers may be provided and that typically each tier will comprise different types of storage devices although different tiers may also comprise the same type of storage device either at different locations or from different providers in order that the tiers collectively provide adequate redundancy and/or reliability.

In this example, the service is a hardware or software module which is stored and operates on a computer which is on the enterprise local area network. The service is responsible for the organisation of the back-up tiers and supervises the transport of data within and between the tiers. In order to improve reliability, the service may be replicated on multiple computers and on multiple tiers. In addition, client software is provided which executes on devices that contain the user data to be backed up.

The service receives characteristic information relating to each of the tiers such, for example, the speed of that tier, the scalability or capacity of that tier, the availability of the storage within that tier, the confidentiality level of data stored within the tier and/or a cost indicator associated with storing data within that tier. Typically, it is desirable to have tiers with diverse characteristics.

The service also receives an indication of the user data to be duplicated on the storage tiers, together with an indication of the duplication requirements for that user data. For example, the duplication requirements may indicate whether the user data is to be duplicated on every available tier or only a subset of the tiers. In addition, a minimum availability level may be specified. Likewise, an indication of the confidentiality of the data may be provided. Also, an indication of the unit or maximum cost associated with duplicating the data may be specified. In addition, an indication of how quickly any initial duplication is permitted to take may be indicated. It will be appreciated that the an indication of the duplication requirements may be user-specific and/ or user data-specific.

The service then configures each tier according to any number of configuration characteristics. These configuration characteristics may be static (such as use no more than a predetermined amount of storage on a given disc), or can vary dynamically due to reconfigurations being made by the service, changes to the configuration of the tiers or changes to the characteristics of those tiers. The service also directs the clients when they have requests to store or retrieve data and may also initiate data moving or duplication among tiers of the back-up system.

When user data is required to be backed up, it is typically split or fragmented before it leaves the user device. It will be appreciated that fragmenting the data helps to improve security, reduces the amount of data transferred at any point in time and provides for the user data fragments to be distributed over a number of different devices. The client is also responsible for reconstructing the user data from these fragments when a restore operation is required.

### Client Operation

As shown in Figure 2, once the user data to be duplicated has been identified, together with the duplication requirements, then the user data is fragmented and each fragment is duplicated. At Step S10, when a fragment is to be duplicated, the client executing on the user device attempts to contact the service in order receive an indication of the best available tier for that fragment to be duplicated on.

At Step S20, a determination is made of whether the service is available or not. If the service is available, then it returns an indication of the destination tier for that fragment of user data at Step S30.

If the service is not available, then at Step S40, the client software selects a destination tier from a pre-configured list of available tiers previously provided by the service. The choice of tier may be made randomly or may be based on any available characteristic information such as, for example, geographical proximity of that tier to the user device, the latency, the available throughput, together with any charging information. The choice of tier may also be made based on the duplication requirements such as, for example, making an initial backup as quickly and/ or as reliably as possible.

Once the destination has been identified, then at Step S50, the client running on the user device sends the fragment to that tier.

### Data Distribution

In order to achieve any reliability, availability or speed requirements set by the user, a tier that receives a fragment may need to replicate it to other tiers or, for those tiers that need to contain more than one copy of each fragment (for example, this may be the case in a distributed system such a as a peer-to-peer system), create a number of copies of the fragment as specified. Typically, such duplication is controlled by a service running within each tier, although it may also be controlled by another service or even a client.

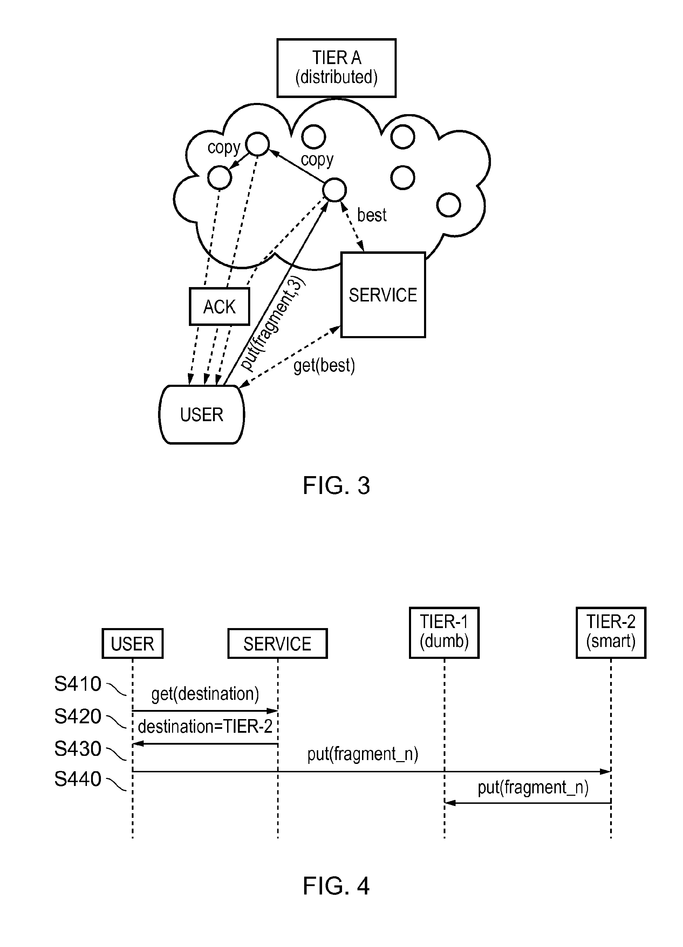

Such an arrangement is shown in more detail in Figure 3 which shows a tier comprising distributed storage. As can be seen, the client on the user device is informed by the service that the user data should be duplicated to tier A. Accordingly, the client on the user device transmits a fragment to node B in tier A. The service may indicate to the client running in the user device how many copies of the fragment need to be made within tier A in order to meet the user requirements, based on knowledge of the characteristics of tier A. Alternatively, the client device may set a minimum number of copies itself or the client running on node B may determine a minimum number of copes to be made. In any event, the fragment is reduplicated within this tier. In this example, the fragment is reduplicated onto node C and then onto node D.

In this example, the client running on the user device indicated how many copies to be made and so each node sends an acknowledgement back to that client indicating that a copy has been made. It will be appreciated that should the client within, for example, node B have determined the number of copies to be made then the acknowledgements may be sent back to that node, likewise if the service had decided the number of copies to be made then the acknowledgements may be sent back to that service.

### Tier Types

Tiers can be categorised as either "smart tiers" or "dumb tiers". A smart tier is able to execute client software itself and may typically consist of local storage on any user device that is part of the system, dedicated local storage hardware, such as a file server or network attached server, or remote dedicated storage hardware, such as a file server or network attached server. Typically a dumb tier does not have the capability of running the client software and will typically consist of a shared network drive, tape drives or cloud storage.

### Smart Tiers

Smart tiers can also co-ordinate the duplication of user data onto other tiers. Figure 4 shows an example operation of a smart tier.

At Step S410, the client running on the user device requests that the service provide a destination for that user data.

At Step S420, the service indicates that the user data should be stored in tier 2, which is a smart tier.

At Step S530, the client operating on the user device stores the user data in tier 2. In this example, tier 2 is a smart tier which executes its own service and/ or client. The service and/ or client may then co-ordinate the duplication of the user data within that tier. In addition, the service and/ or client running on tier 2 also co-ordinates the duplication of that user data on tier 1 which is a dumb tier.

At Step S440, the service and/or client operating in tier 2 determines that the user data is not present in tier 1 and so stores the user data in tier 1. Through this approach, it can be seen that the two tiers can be maintained in synchronisation. Also, all of the above operations can be performed asynchronously, based on tier availability.

### Service Operation

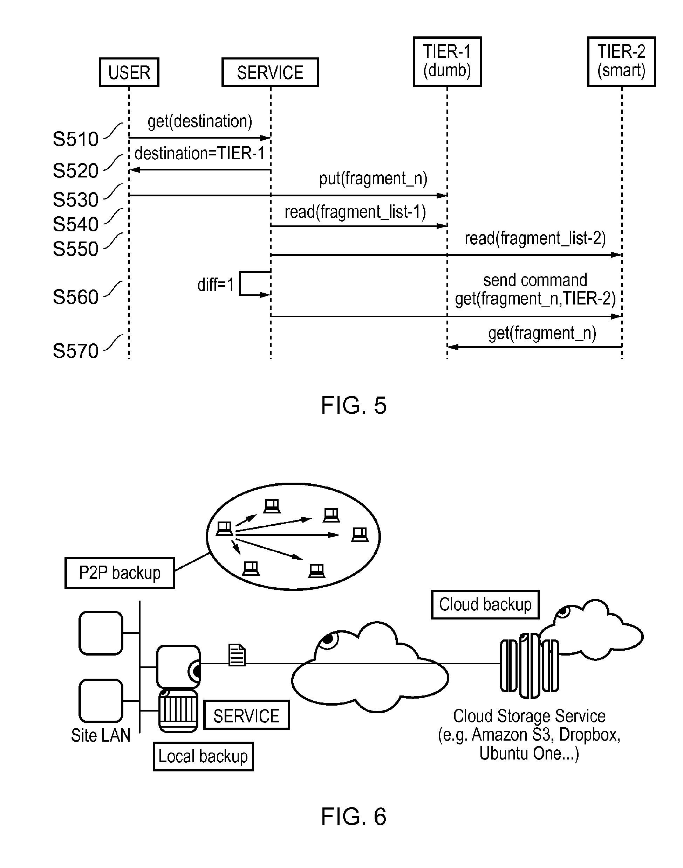

Figure 5 shows an arrangement where the service co-ordinates the duplication and synchronisation of user data onto the different tiers.

At Step S510, the client running on the user device requests that the service provide a destination for that user data.

At Step S520, the service indicates that the user data should be stored in tier 1.

At Step S530, the client operating on the user device stores the user data in tier 1.

At Step S540 the service reads the list of data stored in tier 1, and determines that user data has been stored.

At Step S550, the service reads the list of user data stored in tier 2. In this example, there is user data stored in tier 1 which is not stored in tier 2 and so the lists differ.

Accordingly, at Step S560, the service instructs tier 2 to obtain a copy of the missing user data from tier 1 and, at Step S570, tier 2 obtains the missing data from tier 1 and duplicates this within tier 2. Through this approach, it can be seen that the two tiers can be maintained in synchronisation. Also, all of the above operations can be performed asynchronously, based on tier availability.

### Example Operation

Consider an arrangement where user data is stored on a laptop. The user laptop may form part of a corporate local area network (LAN) when attached to that network. The user may indicate that there is user data which needs to be backed up. The user requires the information to be backed up in at least three locations and that the initial back up should be completed as quickly as possible. Accordingly, when the laptop attaches to the corporate LAN, the user data to be backed up is identified and fragmented. The laptop contacts a service running on the corporate local area network. The service identifies the existence of two tiers. The first tier is a peer-to-peer network made up of other user devices within the corporate local area network. Each of these user devices permits a maximum of a predetermined amount of other user data to be duplicated onto their storage devices. The second tier is an internet-based cloud storage.

The service instructs the client running on the user device to seed peers within the first tier peer-to-peer network. Accordingly, the user data fragments are then distributed across the peer-to-peer network and the required number of copies of each data fragment are made based on the duplication requirements of the user and the characteristics of that peer-to-peer network. For example, at least two complete copies of the user data may be maintained within the first tier. It will be appreciated that seeding devices within the peer-to-peer network satisfies the requirement to perform the initial duplication rapidly.

Thereafter, irrespective of whether or not the user laptop is still connected to the corporate local area network, the user data fragments may then be transferred from the first tier peer-to-peer network to the second tier cloud storage. The transfer of this data can occur at a convenient time, taking into account the available band width of any connection to the cloud storage and/ or any cost regime associated with transferring that user data. Eventually, all the user data will then be also stored in the second tier, thereby satisfying the condition to maintain at least three copies. It will be appreciated that more than one copy may be stored in the second tier.

### Tier Reconfiguration

It will be appreciated that should any of the user devices within the tiers fail then the missing data may then be either reduplicated within that tier or accessed from another tier. Furthermore, individual tiers may be commissioned or decommissioned. Any decommissioned tier will delete user data which is no longer required and any commissioned tier will duplicate data from another tier.

### Data Restoring

Should the user laptop become lost, destroyed or unavailable, then a new laptop may be issued to the user. The user may then, using the user client, contact the service and then retrieve the user data stored either on the peer-to-peer network or, if the peer-to-peer network is unavailable then the same data may also be retrieved from the cloud storage.

Such an arrangement provides an efficient and reliable duplication or back-up regime which operates with higher availability, reliability and performance all at a potentially lower cost.

### Enterprise Arrangement

Figure 6 shows an enterprise arrangement comprising a Peer-2-peer tier consisting of all the enterprise laptops and PC on a site, a local disk server tier and a cloud storage tier.

Initial backup is done quickly and efficiently by fragmenting a file to be backed up into blocks and then sending out several replicas of each block to the Peer-2-Peer system. This is done on the local area network and in a peer-2-peer manner, so it is fast, efficient, and scalable. Now the laptop/ PC does not have to be involved any further, the service will now administrate the further processes. Seen from the user's point of view, this means that the backup is quick and easy and there is no waiting for, e.g., a slow connection to the Cloud. The user data is now reliably stored in a single tier and is readily available on-site, if a backup copy is needed. The service will now replicate the blocks to the other tiers, e.g., to the local storage server, and (one of) the cloud storage servers. Because this approach is not reliant on the cloud server guaranteeing the presence of the data (because we have copies on other tiers), there is no need for an expensive, reliable managed backup cloud solution, but rather merely "vanilla" cloud storage with consumer grade reliability. If there are several cloud providers, it is possible to shop around and store the blocks wherever it is cheapest to do so; it does not matter upon which of the cloud tiers the blocks are stored as long as they are stored on at least one cloud server.

Eventually, the blocks have been replicated on all tiers (or as many tiers as the administrator's policy prescribes) and now can be retrieved from any of the tiers, e.g., if a laptop is on-site, then quickly from the Peer-2-peer system or the local file server, or if it is off-site from the cloud. Should the local peer-2-peer system be missing a block (statistically this can happen in a peer-2-peer system), the missing block can be retrieved from one of the other tiers.

When storing blocks to the cloud, it is possible to schedule the transfer to have as little effect as possible on other traffic (presumably "real" work) and to take place when there are no peaks or when the cost is lowest. In this way it is possible to save on the out-of-house connection because it does not have to be fast nor reliable. Cost comparisons of commercial grade leased lines and consumer-grade internet connections show a cost difference of a factor of more than 10.

Each tier can use the most inexpensive solution available because each tier is not required to have a high level of reliability. For example, cost comparisons show that commercial cloud backup services cost more than 10 times as much as plain cloud storage. Also, this approach allows easy switching between cloud storage providers: in the worst case, just completely cut off an existing provider, set up another in a new tier, and embodiments will migrate blocks to the new provider in a cost-effective manner-the service simply discovers that all blocks are missing from the new tier and initiates the copying of the blocks.

Many new laptops come with disks in the range of 250 Gigabytes to 1 Terabyte. But many enterprise users have backup requirements of only 10 - 30 Gigabytes, which leaves plenty of available space on their computers effectively supplying the storage space for the Peer-2-peer system. Even if the enterprise requires larger backup sets for each user, the marginal cost of buy extra large disks when buying new laptops, is small.

For the local file server tier, it is not necessary to buy expensive RAID storage; instead it is better to buy two or three non-RAID file servers and set them up as separate tiers - possibly also in different parts of the building to mitigate the effects of, e.g., a local fire.

Hence, it can be seen that embodiments cut both capital and operating expenditure for backup by building the system using low cost, low reliability components and then achieving reliability by using our multi-tier system.

### Backup Categorisation

Generally, backup solutions possess five distinguishing characteristics, referred to as the "5-factors": speed, scalability, availability, confidentiality, and cost.

Speed - Data backup and recovery should be performed in the shortest possible time. A fast backup system also prevents users' deplorable habit of avoiding periodic backup because existing backup processes take too long to complete and generally affect computer's performance.

Scalability - An optimal backup system is required to scale well with the number of users and with the amount of data that has to be stored.

Availability - A backup system has to be highly available. A percentage of availability of at least 99.999% (five nines) is strongly desired.

Confidentiality - Data stored in the backup system should be kept as secure as possible. The system should be able to protect the data from external and internal attacks as well as to keep the information content confidential, that is only disclose the content to authorized users of the system, and make it inaccessible for any others.

Cost - An optimal backup system should have low capital and operational costs.

There are many approaches to building data backup solutions, and all have their own advantages and disadvantages with relation to the five characteristics described above. Existing backup solutions may consist of (and not limited to):
1) Local backup (for example to a local disk server)
2) Local backup to a RAID disk storage system
3) Remote dedicated backup
4) Peer-to-peer backup where backup copies are distributed between multiple computers that thus effectively hold each other's backup copies.
5) Online backup, AKA Cloud backup

Table 1, shows a comparison of the backup techniques according to the 5-factors described above. Each of the existing technologies has its advantages and disadvantages.

**Table 1: Existing backup solutions 5-factors comparison**

| | Speed | Scalability | Availability | Confidentiality | Cost |
|---|---|---|---|---|---|
| Local Backup | Acceptable | Low | Low | High | High |
| Local RAID Backup | Acceptable | Low | Good | High | Very High |
| Remote Backup | Very Low | Low | Low | High | Very High |
| P2P Backup | High | High | Good | Low | Very Low |
| Cloud Backup | Low | High | High | Low | Very High |

Local RAID Backup achieves good availability at a reasonable hardware cost by using multiple inexpensive disks where multiple copies of the data are stored on separate inexpensive and less reliable disks. Despite each disk being less reliable, the overall reliability is excellent because the data is replicated - even if several disks fail, there are copies of the data on other disks. However, this solution is still vulnerable to the failure of the single site where the RAID system is set up, e.g., a building fire, or an earthquake. Also, the cost is high because it requires on-site careful monitoring and maintenance because otherwise it cannot guarantee reliability.

A common enterprise solution to backup is to use Cloud Backup: the enterprise signs a contract for a managed backup solution where the enterprise computers and laptops at regular intervals send backup copies to a cloud data centre. The Cloud provider then ensures that the data is replicated at several of its sites as to ensure high availability. Furthermore, the solution scales because the cloud provider happily supplies more cloud storage - at cost. The overall cost is high because the cloud provider needs to maintain several expensive and highly reliable data centres to guarantee the availability of the data. Often cloud based backup suffers from poor speed because of slow links to the cloud. This can be mitigated by using fast links, but that comes at a high cost; all in all a good solution but expensive.

The embodiments mentioned above leverage a plurality of storage technologies in a data backup scenario in order to balance these characteristics to the owner's preference.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory

(ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A user data duplication method, comprising:
receiving characteristic information relating to characteristics of each of a plurality of heterogeneous storage domain tiers, each storage domain tier having differing characteristics to other storage domain tiers;
receiving an indication of user data to be duplicated on each storage domain tier in accordance with duplication requirements; and
coordinating duplication of said user data on each storage domain tier to meet said duplication requirements based on said characteristic information.

2. The method of claim 1, wherein each storage domain tier comprises differing storage technologies.

3. The method of claim 1 or 2, wherein at least one storage domain tier comprises a combination of different storage devices.

4. The method of any preceding claim, wherein said characteristic information comprises at least one of an access speed, an availability, a reliability and a confidentiality of each storage domain tier.

5. The method of any preceding claim, wherein said duplication requirements comprise at least one of an access speed, an availability, a reliability and a confidentiality of said user data.

6. The method of any preceding claim, wherein said step of coordinating duplication comprises determining a number of copies of said user data to be stored by at least one storage domain tier in order to meet said duplication requirements given said characteristic information of that storage domain tier.

7. The method of any preceding claim, wherein said step of coordinating duplication comprises instructing a node within each tier to coordinate the creation of said number of copies of said user data within that storage domain tier.

8. The method of any preceding claim, wherein at least one storage domain tier comprises storage devices of users whose user data is to be duplicated.

9. The method of any preceding claim, comprising the step of re-coordinating duplication of said user data based on changes to at least one of said characteristic information and said duplication requirements.

10. The method of any preceding claim, wherein said step of coordinating duplication of said user data comprises duplicating said user data onto an initial one of said plurality of storage domain tiers indicated by its characteristic information to be the quickest of the plurality of storage domain tiers to store said user data.

11. The method of any preceding claim, wherein said step of duplicating of said user data between said plurality of storage domain tiers comprises transferring user data between said plurality of storage domain tiers to minimise impact on other traffic.

12. The method of claim 11, wherein said step of transferring data between said plurality of storage domain tiers minimises impact on other traffic by transferring user data when a capacity of a link between tiers is not being fully utilised above a preconfigured threshold.

13. The method of any preceding claim, comprising the step of duplicating, on each storage domain tier, coordination information relating to coordinating duplication of said user data on each storage domain tier.

14. A computer program product operable, when executed on a computer, to perform the method steps of any preceding claim.

15. An apparatus operable to perform user data duplication, comprising:
reception logic operable to receive characteristic information relating to characteristics of each of a plurality of heterogeneous storage domain tiers, each storage domain tier having differing characteristics to other storage domain tiers and to receive an indication of user data to be duplicated on each storage domain tier in accordance with duplication requirements; and
coordination logic operable to coordinate duplication of said user data on each storage domain tier to meet said duplication requirements based on said characteristic information.
